# EUROPÄISCHE PATENTANMELDUNG

(11) **EP 4 454 873 A1**
(43) Veröffentlichungstag der Anmeldung: **30.10.2024**
(21) Anmeldenummer: 24172683.5
(22) Anmeldetag: 26.04.2024
(51) Int. Cl.: B29D 30/00

(54) **ANPRESSVORRICHTUNG FÜR EINEN SCHAUMSTOFFSTREIFEN IN EINEM REIFEN UND VERFAHREN ZUM ANPRESSEN**

(30) Priorität: 28.04.2023 DE 102023111133
(71) Anmelder: SAR Elektronic GmbH, 84130 Dingolfing (DE)
(72) Erfinder: Bause, Roland, 84030 Ergolding (DE)
(74) Vertreter: Cullinane, Marietta Bettina

(57) **Zusammenfassung**

Die vorliegende Erfindung betrifft eine Vorrichtung zum Anpressen eines Schaumstoffstreifens an der inneren Lauffläche eines Reifens, wobei die Vorrichtung eine Presseinheit (110) umfasst, die eine Trägervorrichtung und ein Presselement umfasst, wobei die Trägervorrichtung eine Trägervorrichtung für das Presselement ist und wobei das Presselement (110) ein aufblasbares Element darstellt, das sich über den gesamten äußeren Umfang der Trägervorrichtung erstreckt und zumindest in radialer Richtung expandierbar ist. Weiterhin betrifft die Erfindung ein Verfahren zum Anpressen eines Schaumstoffstreifens an der inneren Lauffläche eines Reifens.

## Beschreibung

Die vorliegende Erfindung betrifft eine **Anpressvorrichtung** für einen Schaumstoffstreifen in einem Reifen und ein Verfahren zum Anpressen eines Schaumstoffstreifens in einem Reifen.

Beim Fahren erzeugen Fahrzeugreifen Abrollgeräusche. Um diese Geräusche zu minimieren, ist es bekannt in den Reifenlufthohlraum, der sich zwischen der Felge und dem Reifen befindet, einen Schaumstoffstreifen einzubringen. Ohne den Schaumstoffstreifen wirkt der Reifenhohlraum als Resonanzkörper, der Luftvibrationen verstärkt, die in die Fahrzeugstruktur übertragen werden. Der Schaumstoffstreifen wird in den Reifen eingeklebt und verringert die Resonanz des Reifenhohlraums.

Ein Einbringen des Schaumstoffstreifens ist beispielsweise aus der CN113696528A bekannt. Hierbei wird eine Schaumstoffstreifen-Kassette, in der der Schaumstoffstreifen aufgewickelt ist, in den Reifen eingeführt und von der Kassette der Schaumstoffstreifen abgerollt und am Inneren des Reifens mittels Klebstoff appliziert. Ein Nachteil, der bei dieser Art des Einbringens des Schaumstoffstreifens in den Reifen besteht, ist, dass die Verbindung zwischen dem Schaumstoffstreifen und der Innenseite des Reifens nur durch eine Rolle an der Kassette erfolgt. Der Druck auf den Schaumstoffstreifen und damit die Verbindung des Schaumstoffstreifens zu der Innenseite des Reifens ist damit gering.

Weiterhin ist zum Einbringen eines Schaumstoffrings in einen Reifen aus der EP2727713B1 eine Vorrichtung bekannt, bei der der Schaumstoffring von radial nach außen bewegbaren Segmenten und zwischen den Segmenten angeordneten Fingern getragen wird. Durch Bewegen der Segmente in radialer Richtung nach außen wird der Schaumstoffring an die Innenseite des Reifens gedrückt. Ein Nachteil dieser Vorrichtung ist, dass diese einen komplexen Aufbau aufweist.

Aufgabe der vorliegenden Erfindung ist es daher eine Lösung zu schaffen, mittels derer ein auf die innere Lauffläche eines Reifens appliziertes Schaumstoffelement auf einfache Weise und zuverlässig an der inneren Lauffläche des Reifens angepresst werden kann.

Der Erfindung liegt die Erkenntnis zugrunde, dass diese Aufgabe gelöst werden kann, indem ein Presselement verwendet wird, das ein aufblasbares Element darstellt.

Gemäß einem ersten Aspekt betrifft die Erfindung daher eine Vorrichtung zum Anpressen eines Schaumstoffstreifens an der inneren Lauffläche eines Reifens. Die Vorrichtung ist, dadurch gekennzeichnet, dass die Vorrichtung eine Presseinheit umfasst, die eine Trägervorrichtung und ein Presselement umfasst, wobei die Trägervorrichtung eine Trägervorrichtung für das Presselement ist und wobei das Presselement ein aufblasbares Element darstellt, das sich über zumindest einen Teil des äußeren Umfangs der Trägervorrichtung erstreckt und zumindest in radialer Richtung expandierbar ist.

Als Schaumstoffstreifen wird ein flexibler Streifen aus Schaumstoffmaterial bezeichnet. Die Enden des Streifens können gegebenenfalls aneinander befestigt sein und dadurch einen Schaumstoffring bilden.

Als Reifen wird ein Kraftfahrzeugreifen bezeichnet. Als innere Lauffläche des Reifens wird der radial nach innen gerichtete Teil des Inneren des Reifens bezeichnet. Somit liegt die innere Lauffläche gegenüber dem Teil der Außenseite des Reifens in den in der Regel das Profil eingebracht wird.

Die Vorrichtung zum Anpressen des Schaumstoffstreifens wird im Folgenden auch als Anpressvorrichtung oder Andrückvorrichtung bezeichnet. Als Anpressen wird das Andrücken eines Schaumstoffstreifens an die innere Lauffläche bezeichnet, wobei der Schaumstoffstreifen an der inneren Lauffläche zuvor appliziert und somit zumindest vorläufig fixiert war. Hierbei ist der Schaumstoffstreifen mittels Klebstoff appliziert und dadurch fixiert.

Erfindungsgemäß umfasst die Vorrichtung eine Presseinheit. Als Presseinheit wird die Montageeinheit bezeichnet mittels derer Druck beziehungsweise Kraft auf den in dem Reifen eingebrachten Schaumstoffstreifen aufgebracht werden kann.

Die Presseinheit umfasst eine Trägervorrichtung und ein Presselement. Die Trägervorrichtung stellt eine Trägervorrichtung für das Presselement dar. Als Trägervorrichtung wird der Teil der Presseinheit bezeichnet, an der das Presselement befestigt ist und über die vorzugsweise Aufblasfluid in das Presselement eingeleitet werden kann. Die Trägervorrichtung weist vorzugsweise eine Mittelachse auf, von der sich zumindest ein Bauteil, das auch als Begrenzungsplatte bezeichnet werden kann, vorzugsweise senkrecht zu der Mittelachse erstreckt. Die Begrenzungsplatte weist dabei eine flächige Form auf und besteht aus einem starren Material. Die Form der Begrenzungsplatte kann rund oder eckig sein. Insbesondere kann die Begrenzungsplatte beispielsweise eine quadratische oder mehreckige Form, eine kreisrunde oder eine ovale Form aufweisen. Die Begrenzungsplatte ist vorzugsweise ein kreisrundes Bauteil. Die Begrenzungsplatte der Trägervorrichtung erstreckt sich dabei in radialer Richtung von der Mittelachse der Trägervorrichtung. Im einfachsten Fall wird die Trägervorrichtung durch zwei Begrenzungsplatten sowie ein gegebenenfalls zwischen diesen vorgesehenes Verbindungselement gebildet.

Angaben, wie radial und axial entsprechen - soweit nicht anders angegeben - der radialen beziehungsweise axialen Richtung der Trägervorrichtung. Als radial wird dabei eine von der Mittelachse der Trägervorrichtung, insbesondere einer Begrenzungsplatte, entlang des Radius verlaufende Richtung bezeichnet. Als axial wird eine Richtung parallel zu der Mittelachse der Trägervorrichtung, insbesondere einer Begrenzungsplatte, bezeichnet. Bei dem in einen Reifen eingebrachten Zustand der Trägervorrichtung liegt die Mittelachse der Trägervorrichtung vorzugsweise in der Mittelachse des Reifens.

Als Presselement wird das Element bezeichnet, das im expandierten Zustand zumindest teilweise mit dem Schaumstoffstreifen in Kontakt steht.

Als expandierter Zustand wird der Zustand des Presselementes bezeichnet, in dem dieses vollständig mit Aufblasfluid befüllt ist, das heißt aufgeblasen ist. Der Druck in dem Presselement wird dabei vorzugsweise so eingestellt, dass das Presselement in seine maximale Form ausgedehnt ist und auch bei Krafteinwirkung von außen diese Form nicht verändert.

Das Presselement erstreckt sich über zumindest einen Teil des äußeren Umfangs der Trägervorrichtung. Als äußerer Umfang der Trägervorrichtung wird der äußere Rand der Trägervorrichtung bezeichnet, der den größten Abstand zu einer Mittelachse der Trägervorrichtung aufweist. Besteht die Trägervorrichtung aus Begrenzungsplatten, so erstreckt sich das Presselement zumindest einen Teil des äußeren Umfangs jeder Begrenzungsplatte. Das Presselement deckt damit zumindest einen Teil des äußeren Umfangs der Trägervorrichtung ab. Besteht in Umfangsrichtung zwischen den Teilen des Presselementes ein Abstand, so ist vorzugsweise jeder Teil des Presselementes so ausgestaltet, dass sich dieses beim Aufblasen und Expandieren in Umfangsrichtung soweit vergrößert, dass die Teile des Presselementes in Umfangsrichtung aneinander anliegen.

Das Presselement stellt ein aufblasbares Element dar. Als aufblasbares Element wird ein Element bezeichnet, das einen Innenraum aufweist, in den Fluid eingebracht werden kann, durch das sich die Form und/oder Größe des Elementes verändert. Das Presselement ist daher vorzugsweise aus einem flexiblem Material hergestellt, das undurchlässig gegenüber Fluid ist. Insbesondere kann das Presselement aus einem flexiblen, luftundurchlässigen Material bestehen. Gemäß einer Ausführungsform kann das Material des Presselementes ein dehnbares Material sein. Hierbei kann die Dehnbarkeit zum einen durch das Material des Presselementes und zum anderen durch die Dicke des Materials eingestellt werden. Beispielsweise kann das das Presselement aus einer Kunststofffolie hergestellt sein.

Das Presselement ist zumindest in radialer Richtung expandierbar. Die Expansion wird insbesondere durch das Befüllen des Presselementes mit einem Aufblasfluid erzielt. Insbesondere ist das Presselement in der Richtung von der Mittelachse der Trägervorrichtung aus in radialer Richtung über den äußeren Umfang der Trägervorrichtung expandierbar. Zu diesem Zweck weist das Presselement vorzugsweise eine Form auf, die eine Expansion in radialer Richtung über den äußeren Umfang der Trägervorrichtung erlaubt. Als expandierbar wird ein Presselement bezeichnet, bei dem sich von einem nicht aufgeblasenen oder evakuierten Zustand zu einem aufgeblasenen beziehungsweise expandierten Zustand die Abmessung des Presselementes zumindest bereichsweise in radialer Richtung vergrößert wird.

Das Presselement kann zusätzlich zu einer Expansion in radialer Richtung auch in axialer Richtung und/oder in Umfangsrichtung expandierbar sein. Insbesondere bei einem mehrteiligen Presselement, bei dem die Teile des Presselementes über den Umfang der Trägervorrichtung verteilt angeordnet sind, sind die Teile des Presselementes vorzugsweise zusätzlich zu der radialen Richtung auch in Umfangsrichtung expandierbar.

Die Trägervorrichtung kann mit dem Presselement einteilig ausgestaltet sein. Bei dieser Ausführungsform kann die Trägervorrichtung beispielsweise aus Kunststoff bestehen, insbesondere Kunststoffplatten aufweisen. An dieser Trägervorrichtung kann das Presselement, beispielsweise aus Kunststofffolie, angeschweißt sein. Alternativ ist das Presselement lösbar mit der Trägervorrichtung verbunden. Bei dieser Ausführungsform kann die Trägervorrichtung beispielsweise aus Metall bestehen und das Presselement, beispielsweise aus einer Kunststofffolie, kann an der Trägervorrichtung beispielsweise über Stifte oder Schrauben verbunden sein.

Die Presseinheit ist vorzugsweise so ausgestaltet, dass der äußere Umfang der Trägervorrichtung kleiner ist, als die Felgenöffnung des Reifens. Im aufgeblasenen Zustand des Presselementes ist der äußere Umfang des Presselementes vorzugsweise größer als der innere Durchmesser des Schaumstoffstreifens, der an der inneren Lauffläche appliziert ist, und weiter bevorzugt größer oder gleich dem inneren Durchmesser der inneren Lauffläche des Reifens.

Indem die Anpressvorrichtung für den Schaumstoffstreifen ein Presselement aufweist, das sich über zumindest einen Teil des äußeren Umfangs der Trägervorrichtung erstreckt, ein aufblasbares Element darstellt und zumindest in radialer Richtung expandierbar ist, kann eine Reihe von Vorteilen erzielt werden.

Insbesondere kann auf einfache Weise nämlich durch Einleiten von Fluid in das Presselement, eine Krafteinwirkung auf den Schaumstoffstreifen erzielt werden. Das Ansteuern einzelner Segmente, wie dies im Stand der Technik beschrieben ist, ist hierbei nicht erforderlich. Durch die Anpressvorrichtung kann der in den Reifen eingebrachte Schaumstoffstreifen an die innere Lauffläche des Reifens angedrückt werden. Hierdurch kann die durch den an dem Schaumstoffstreifen oder der inneren Lauffläche aufgebrachten Klebstoff hergestellte Verbindung verbessert werden. Hierbei kann zum einen die Verteilung des in der Regel in Raupen aufgebrachten Klebstoffs an der inneren Lauffläche vergrößert werden. Zum anderen kann das Eindringen des Klebstoffs in den Schaumstoffstreifen erzielt werden, wodurch die Klebefläche weiter vergrößert wird.

Gemäß einer bevorzugten Ausführungsform erstreckt sich das Presselement über den gesamten äußeren Umfang der Trägervorrichtung.

Hierbei kann durch ein radiales Expandieren des über den gesamten Umfang der Trägervorrichtung vorgesehenen Presselementesdas Presselement gleichzeitig über den gesamten inneren Umfang des Schaumstoffstreifens mit diesem in Kontakt gebracht werden. Zudem kann bei einem Presselement mit einem runden Querschnitt bei weiterem Aufblasen des Presselementes die Kontaktfläche zwischen dem Schaumstoffstreifen und dem Presselement in axialer Richtung vergrößert werden. Schließlich kann bei weiterer Erhöhung des Drucks innerhalb des Presselementes die Kraft auf den Schaumstoffstreifen erhöht werden. Somit kann mit der erfindungsgemäßen Anpressvorrichtung ein über den Umfang gleichmäßiges Andrücken des Schaumstoffstreifens mit gleichsteigender Kraft erfolgen. Im Vergleich zum Stand der Technik, bei dem nur einzelne Segmente zum Andrücken verwendet werden, entstehen mit der erfindungsgemäßen Anpressvorrichtung keine Scherbeanspruchung auf die Oberfläche des Schaumstoffstreifens. Zudem kann der gleichmäßige Druck über den gesamten Umfang für eine längere Zeit aufrechterhalten werden, wodurch die Verbindung zwischen dem Schaumstoffstreifen und der inneren Lauffläche des Reifens weiter verbessert wird. Der Schaumstoffstreifen wird in der Regel als ebener Streifen in den Reifen appliziert, das heißt weist in Breitenrichtung der inneren Lauffläche vor dem Einbringen keine Krümmung auf. Nach dem Applizieren, das im Stand der Technik nur punktuell über eine Andrückrolle oder über segmentweises Andrücken erfolgt, tendiert der Schaumstoffstreifen daher aufgrund der Eigenspannung in der Regel dazu den Ausgangszustand, das heißt ohne Krümmung in Breitenrichtung einzunehmen. Hierdurch löst sich der applizierte Schaumstoffstreifen wieder von der inneren Lauffläche.

Durch die erfindungsgemäß erzielbare bessere Verbindung zwischen Reifen und Schaumstoffstreifen kann der Eigenspannung und damit einem Ablösen des Schaumstoffstreifens entgegengewirkt werden. Insbesondere kann die Klebefläche zwischen innerer Lauffläche und Schaumstoffstreifen vergrößert werden.

Das Presselement kann in Draufsicht im aufgeblasenen Zustand eine runde Form aufweisen. Das Presselement kann insbesondere einen ovalen äußeren Umfang aufweisen. Insbesondere kann der äußere Umfang ein Kreis oder eine Ellipse sein. Bei einer Trägervorrichtung, bei der die Begrenzungsplatten jeweils eine Kreisform aufweisen und das Presselement sich über den gesamten Umfang der Trägervorrichtung erstreckt, stellt das Presselement im aufgeblasenen Zustand einen Ring dar.

Gemäß einer Ausführungsform stellt das Presselement im aufgeblasenen Zustand einen Ring mit Kreisringform dar. Als Kreisring wird ein Torus bezeichnet. Das Presselement weist bei dieser Ausführungsform daher eine Form auf, die entsteht, indem ein senkrecht stehender Kreis um die Mittelachse der Trägervorrichtung rotiert. Der Vorteil eines Rings besteht darin, dass der Druck, der in dem Presselement vorliegt gleichmäßig über den äußeren Umfang des Presselementes abgegeben werden kann.

Alternativ kann die Form des Presselementes im aufgeblasenen Zustand aber auch von dem eines Kreisrings abweichen. Beispielsweise kann die um die Mittelachse rotierte Form statt eines Kreises eine Ellipse sein. Bevorzugt entspricht die Form des Presselementes im aufgeblasenen Zustand der Innenkontur des Reifens. Somit kann der äußere Umfang des Presselementes im aufgeblasenen Zustand durch eine gerade oder konvex gekrümmte äußere Wand gebildet sein, die parallel zu der Mittelachse der Trägervorrichtung liegt. Von dieser Wand kann die Höhe des Presselementes im aufgeblasenen Zustand zu der Trägervorrichtung abnehmen. Als Höhe wird hierbei die Abmessung des Presselementes im aufgeblasenen Zustand bezeichnet, die parallel zu der Mittelachse der Trägervorrichtung liegt. In dem aufgeblasenen Zustand des Presselementes in dem Reifen liegt die Höhe des Presselementes damit in der Breitenrichtung des Reifens.

Das Presselement weist vorzugsweise zumindest eine Zuführöffnung zum Zuführen von Aufblasfluid auf. Als Aufblasfluid kann insbesondere Luft verwendet werden und dieses wird im Folgenden auch als solche bezeichnet. Indem eine Zuführöffnung vorgesehen ist, kann das Presselement während des Vorgangs der Anpressens des Schaumstoffstreifens aufgeblasen werden und der Druck in dem Presselement eingestellt werden. Gemäß einer bevorzugten Ausführungsform weist das Presselement in der radial nach innen weisenden Innenseite zumindest eine Zuführöffnung für Aufblasfluid auf. Da die radial nach außen weisende Außenseite des Presselementes den Kontaktbereich darstellt, über den das Presselement mit dem Schaumstoffstreifen in Kontakt tritt, ist die Zuführöffnung an der Innenseite außerhalb des Kontaktbereiches und beeinflusst daher den Kontakt nicht. Bei einem ringförmigen Presselement ist die mindesten eine Zuführöffnung an dem inneren Umfang des Rings vorgesehen.

Gemäß einer Ausführungsform erstreckt sich die Zuführöffnung über den gesamten Umfang der radial nach innen weisenden Innenseite des Presselementes. Bei dieser Ausführungsform weist das Presselement daher nur eine Zuführöffnung auf. Die Zuführöffnung bildet somit in dieser Ausführungsform einen ringförmigen Schlitz oder Spalt. Ein Vorteil der Ausführungsform, bei der sich die Zuführöffnung über den gesamten Umfang der Innenseite des Presselementes, insbesondere eines Rings, erstreckt, besteht darin, dass das Aufblasfluid sich gleichmäßig in dem Presselement verteilen kann und auch Druckveränderungen in dem Presselement schnell umgesetzt werden können. Somit kann die Kraft, die durch das Presselement auf den Schaumstoffstreifen ausgeübt wird, ebenfalls gleichmäßig und schnell geändert werden.

Gemäß einer Ausführungsform umfasst die Trägervorrichtung eine erste und eine zweite Begrenzungsplatte. Die erste Begrenzungsplatte wird im Folgenden auch als obere Begrenzungsplatte und die zweite Begrenzungsplatte als untere Begrenzungsplatte bezeichnet. Die Begrenzungsplatten weisen vorzugsweise jeweils eine kreisrunde Form auf. Die Begrenzungsplatten erstrecken sich in radialer Richtung von der Mittelachse der Trägervorrichtung. Vorzugsweise sind die Begrenzungsplatten parallel zueinander in einem Abstand zueinander angeordnet. Indem die Begrenzungsplatten vorgesehen sind, kann die Ausdehnung des Presselements in zwei Richtungen begrenzt werden. Das Presselement erstreckt sich im aufgeblasenen Zustand über den äußeren Umfang der Begrenzungsplatten zumindest in radialer Richtung nach außen. Zudem kann das Presselement sich auch in axialer Richtung über die Begrenzungsplatten in axialer Richtung, das heißt nach oben und nach unten erstrecken.

Gemäß einer Ausführungsform sind die erste und zweite Begrenzungsplatte beweglich über ein Verbindungselement miteinander verbunden, durch das der Abstand zwischen den Begrenzungsplatten verändert werden kann. Das Verbindungselement kann beispielsweise ein Gewindestab oder ein Gewinderohr sein. An diesem oder über dieses Verbindungselement können die Begrenzungsplatten aufeinander zu oder voneinander weg bewegt werden. Je nach Reifentyp kann damit der Abstand zwischen den Begrenzungsplatten eingestellt werden.

Gemäß einer Ausführungsform ist das Presselement am Umfang der ersten und zweiten Begrenzungsplatte befestigt. Die Befestigung kann eine lösbare oder eine unlösbare Befestigung sein. Bei der Ausführungsform, bei der das Presselement am Umfang der Begrenzungsplatten befestigt ist, bildet der zwischen den Begrenzungsplatten bestehende Abstand die ringförmige Zuführöffnung für das Presselement.

Gemäß einer Ausführungsform umfasst die Presseinheit eine Fluidzuleitung zum Zuführen des Aufblasfluids in das Innere des Presselementes. In der Fluidzuleitung ist ein Fluidführungskanal gebildet. Bei der Ausführungsform, bei der die Trägervorrichtung eine obere und untere Begrenzungsplatte umfasst, führt der Fluidführungskanal zu dem Abstand zwischen diesen Begrenzungsplatten. Die Fluidzuleitung kann dabei an einer Durchlassöffnung in der unteren oder der oberen Begrenzungsplatte der Trägervorrichtung angeschlossen sein.

Gemäß einer Ausführungsform umfasst die Fluidzuleitung einem ersten Zuleitungskanal und einen zweiten Zuleitungskanal, die gegeneinander verschiebbar sind. Bei dieser Ausführungsform wird der Fluidführungskanal durch diese beiden Zuleitungskanäle gebildet und stellt einen teleskopierbaren Fluidführungskanal dar. In den ersten Zuleitungskanal ist vorzugsweise zumindest eine Fluidauslassöffnung eingebracht. Der erste Zuleitungskanal wird auch als oberer Zuleitungskanal und der zweite Zuleitungskanal als unterer Zuleitungskanal bezeichnet. Durch die Ausführungsform mit zwei teleskopierbaren Zuleitungskanälen, bei denen in einem Zuleitungskanal eine Fluidauslassöffnung eingebracht ist, kann auch beim Ändern des Abstandes zwischen der ersten und der zweiten Begrenzungsplatte ein zuverlässiges Zuführen des Fluids zu dem Presselement auf einfache Weise gewährleistet werden.

Der obere Zuleitungskanal ist vorzugsweise an der Unterseite der oberen Begrenzungsplatte befestigt. Der untere Zuleitungskanal ist vorzugsweise an der Unterseite der unteren Begrenzungsplatte befestigt. Bei dieser Ausführungsform weist die untere Begrenzungsplatte vorzugsweise eine Durchlassöffnung für den oberen Zuleitungskanal auf.

Gemäß einer Ausführungsform weist die Anpressvorrichtung ein Basisteil zum Auflegen des Reifens auf. Das Basisteil kann dabei ein Tisch sein. Vorzugsweise ist an dem Basisteil die Presseinheit vorgesehen. Die Presseinheit kann dabei teilweise in dem Basisteil integriert sein oder an diesem befestigt sein. Insbesondere kann die Trägervorrichtung umfassend eine erste und eine zweite Begrenzungsplatte an dem Basisteil nach oben verschiebbar befestigt sein.

Gemäß einer Ausführungsform umfasst die Anpressvorrichtung Zentrierelemente, die vorzugsweise in der Oberfläche des Basisteils angeordnet sind. Die Zentrierelemente können beispielsweise Kugelrollen darstellen. Die Zentrierelemente dienen dazu die Mittelachse eines auf das Basisteil aufgelegten Reifens mit der Mittelachse der Trägervorrichtung auszurichten, das heißt den Reifen zu der Mittelachse der Trägervorrichtung zu zentrieren. Diese Zentrierung erfolgt beim Aufblasen des Presselementes automatisch.

Gemäß einem weiteren Aspekt betrifft die vorliegende Erfindung ein Verfahren zum Anpressen eines Schaumstoffstreifens an der inneren Lauffläche eines Reifens. Das Verfahren ist dadurch gekennzeichnet, dass dieses mit einer erfindungsgemäßen Anpressvorrichtung durchgeführt wird.

Vorteile und Merkmale, die bezüglich der Vorrichtung beschrieben wurden, gelten- soweit anwendbar - entsprechend für das erfindungsgemäße Verfahren und umgekehrt und werden gegebenenfalls nur einmalig beschrieben.

Gemäß einer Ausführungsform umfasst das Verfahren den Schritt des Aufblasens des Presselementes nach dem Einbringen in das Innere des Reifens.

Gemäß einer Ausführungsform weist die Vorrichtung eine erste Begrenzungsplatte und eine zweite Begrenzungsplatte auf und das Verfahren umfasst den Schritt des Einstellens des Abstandes zwischen der ersten und zweiten Begrenzungsplatte.

Die Erfindung wird im Folgenden erneut unter Bezugnahme auf die beiliegenden Figuren genauer beschrieben. Es zeigen:
Figur 1: eine schematische, perspektivische Ansicht einer Ausführungsform der erfindungsgemäßen Anpressvorrichtung;
Figur 2: eine schematische, perspektivische Ansicht einer Ausführungsform der Presseinheit mit dem Presselement im evakuierten Zustand;
Figur 3: eine schematische, perspektivische Ansicht der Presseinheit nach Figur 2 mit dem Presselement im aufgeblasenen Zustand;
Figur 4: eine schematische vereinfachte Schnittansicht der Presseinheit nach Figur 2 mit dem Presselement im aufgeblasenen Zustand;
Figur 4a: eine schematische vereinfachte Schnittansicht einer weiteren Ausführungsform einer Presseinheit mit dem Presselement im aufgeblasenen Zustand;
Figur 5: eine schematische, perspektivische Teilschnittansicht der Presseinheit nach Figur 2;
Figur 6: eine schematische, perspektivische Ansicht der Presseinheit nach Figur 2;
Figur 7: eine schematische Schnittansicht der Presseinheit nach Figur 2;
Figur 8: eine schematische Schnittansicht eines Reifenteils ohne Pressbehandlung.

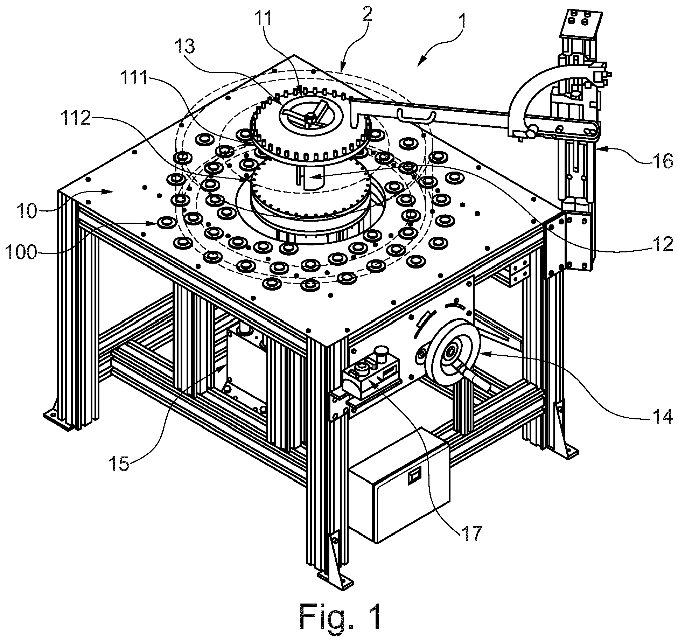

In Figur 1 ist eine Ausführungsform einer Anpressvorrichtung 1 gemäß der vorliegenden Erfindung gezeigt. Die Anpressvorrichtung 1 umfasst in der gezeigten Ausführungsform ein Basisteil 10 und eine Presseinheit 11.

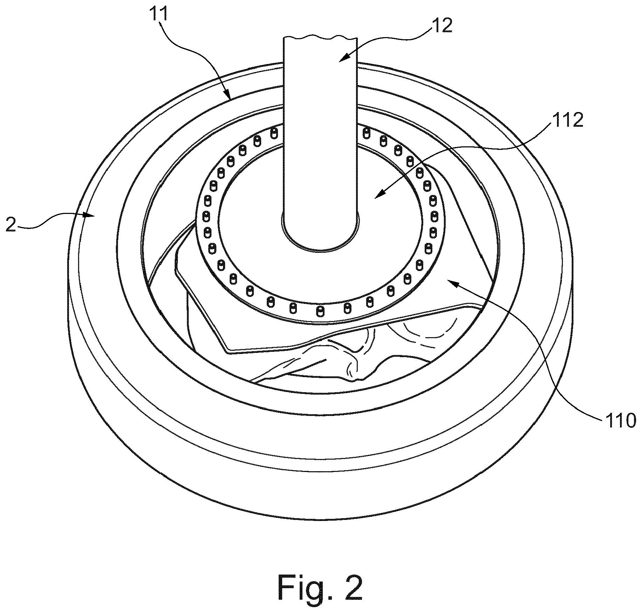

In Figur 2 ist eine schematische Unteransicht der Presseinheit 11 der Figur 1 gezeigt, wobei die Ansicht in der Figur 2 eine Unteransicht der Presseinheit 11 ist. Die Presseinheit 11 umfasst eine untere Begrenzungsplatte 112 und eine obere Begrenzungsplatte (111 in Figur 1) sowie ein Presselement 110. Die Begrenzungsplatten 111, 112 bilden die Trägervorrichtung der Presseinheit 11 und das Presselement 110 stellt ein aufblasbares Element dar.

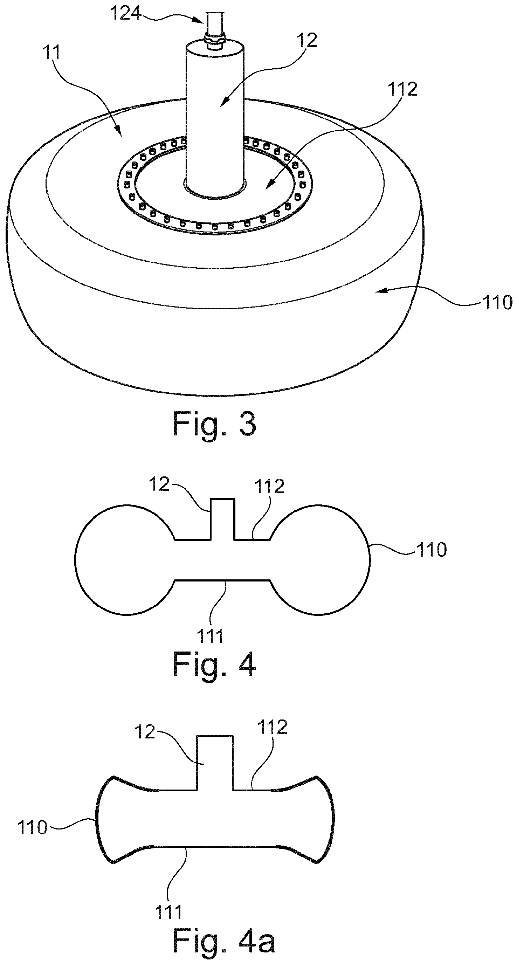

Das Presselement 110 ist in Figur 2 in einem evakuierten Zustand gezeigt. In diesem Zustand liegt kein Fluid im Innenraum des Presselementes 110 vor. In Figur 3 ist das Presselement 110 im aufgeblasenen Zustand gezeigt. Wie sich aus dieser Darstellung ergibt, weist das Presselement 110 im aufgeblasenen Zustand eine Kreisringform auf.

Die Presseinheit 11 weist in der gezeigten Ausführungsform eine erste Begrenzungsplatte 111 und eine zweite Begrenzungsplatte 112 auf. Die erste Begrenzungsplatte 111 wird im Folgenden auch als obere Begrenzungsplatte und die zweite Begrenzungsplatte 112 als untere Begrenzungsplatte bezeichnet. Das Presselement 110 ist am äußeren Umfang der Begrenzungsplatten 111, 112 befestigt. Zu diesem Zweck sind an der Oberseite der oberen Begrenzungsplatte 111 und an der Unterseite der unteren Begrenzungsplatte 112 jeweils Verbindungsstifte entlang des Umfangs vorgesehen. An der oberen Begrenzungsplatte 111 kann darüber ein Ende des Materials des Presselements 110 und an der unteren Begrenzungsplatte 112 das andere Ende des Materials des Presselementes 110 befestigt werden. In der gezeigten Ausführungsform ist jeweils ein Lochring vorgesehen, in dem entsprechend der Position der Verbindungsstifte Löcher vorgesehen sind. Zwischen der Begrenzungsplatte 111 beziehungsweise 112 und dem entsprechenden Lochring kann das jeweilige Ende des Presselementes 110 eingeklemmt werden. Das Presselement 110 kann zudem Öffnungen aufweisen, die den Positionen der Verbindungsstifte entsprechend vorgesehen sind. Die Enden des Presselementes 110 werden bei dieser Ausführungsform über die Verbindungsstifte mit der jeweiligen Begrenzungsplatte 111, 112 verbunden und zwischen der jeweiligen Begrenzungsplatte 111, 112 und dem entsprechenden Lochring eingeklemmt. Die Lochringe können zu diesem Zweck über Schrauben oder Muttern mit den Verbindungsstiften der Begrenzungsplatten 111, 112 verbunden werden. Zusätzlich kann zwischen der Begrenzungsplatte 111, 112 und dem Presselement 110 eine oder mehrere Dichtungen (nicht gezeigt) vorgesehen sein.

Die obere Begrenzungsplatte 111 und untere Begrenzungsplatte 112 stellen jeweils eine kreisrunde Platte dar. Der Durchmesser der unteren Begrenzungsplatte 112 ist kleiner als der Durchmesser der Felgenöffnung des Reifens 2, das heißt des inneren Durchmessers des Reifens. Die Begrenzungsplatten111, 112 sind parallel zueinander angeordnet.

Von der unteren Begrenzungsplatte 112 der Presseinheit 11 aus erstreckt sich ein Teil einer Fluidzuleitung 12. Diese Fluidzuleitung 12 umfasst einen Leitungsanschluss 124, über den die Fluidzuleitung 12 mit Fluid, insbesondere Luft versorgt werden kann. In der Fluidzuleitung 12 ist ein Fluidführungskanal 120 gebildet, über den Luft zu dem und insbesondere in das Presselement 110 geleitet werden kann.

Das Presselement 110 kann mit den Begrenzungsplatten 111, 112 in das Innere des Reifens eingebracht werden. Hierbei erstrecken sich die Begrenzungsplatten 111, 112 parallel zu den Felgenöffnungen des Reifens 2 im Inneren des Reifens 2. Zum Einbringen in den Reifen wird das Presselement 110 evakuiert, das heißt die Luft wird aus dem Presselement 110 entzogen. Dieser Zustand des Presselementes 110 ist in Figur 2 schematisch gezeigt.

Nachdem das Presselement 110 mit den Begrenzungsplatten 111, 112, das heißt der Trägervorrichtung, in den Reifen 2 eingebracht ist, kann über die Fluidzuleitung 12 Fluid, insbesondere Luft, in das Presselement 110 eingebracht werden. Hierdurch wird das Presselement 110 aufgeblasen und expandiert sich dabei in radialer Richtung. Somit kommt das Presselement 110 mit dem Schaumstoffstreifen 22, der an der inneren Lauffläche des Reifens 2 angeklebt ist, in Kontakt. Der Außendurchmesser des Presselements 110 im aufgeblasenen Zustand ist dabei vorzugsweise größer als der Innendurchmesser des in den Reifen 2 eingelegten Schaumstoffstreifen 22 und kann größer oder gleich dem Innendurchmesser der inneren Lauffläche 21 des Reifens 2. Nach dem ersten Inkontakttreten des Presselementes 110 mit dem Schaumstoffstreifen 22 steigt bei weiterer Erhöhung des Drucks in dem Presselement 110 und damit weiterer Ausdehnung des Presselementes 110 in radialer Richtung die Kraft gleichmäßig über die Fläche der Innenseite des Schaumstoffstreifens 22. Dadurch wirkt auf diese Oberfläche des Schaumstoffstreifens 22 keine Scherbeanspruchung.

Vor dem Befüllen des Presselementes 110 kann die Position der Begrenzungsplatten 111, 112 relativ zueinander eingestellt werden. Insbesondere wird der Abstand zwischen den Begrenzungsplatten 111, 112 verändert. Der Abstand kann beispielsweise auf den Abstand zwischen den Felgenöffnungen des Reifens 2 und vorzugsweise auf einen geringeren Abstand eingestellt werden.

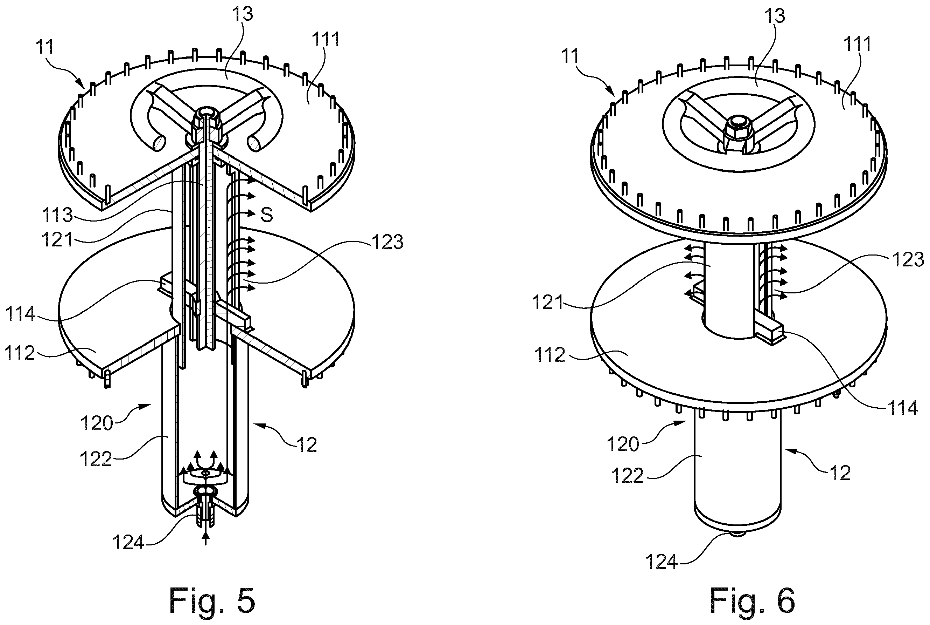

Unter Bezugnahme auf die Figuren 5 bis 7 wird eine Ausführungsform eines Aufbaus, die das Einstellen des Abstandes zwischen den Begrenzungsplatten 111, 112 ermöglicht, beschrieben.

Wie sich aus Figur 5 ergibt, ist die obere Begrenzungsplatte 111 über ein Verbindungselement 113 mit der unteren Begrenzungsplatte 112 verbunden. Das Verbindungselement 113 kann insbesondere eine Gewindestange oder ein Gewinderohr sein. In der gezeigten Ausführungsform ist die obere Begrenzungsplatte 111 über ein Lager an dem Verbindungselement 113 gelagert, das drehfest mit dem Verbindungselement 113 befestigt ist. Die obere Begrenzungsplatte 111 ist über das Lager drehbar an dem Verbindungselement 113 gehalten. An dem oberen Ende des Verbindungselementes 113 ist zudem ein Einstellelement 13 vorgesehen, das mit dem Verbindungselement 113 drehfest verbunden ist. Das Einstellelement 13 ist in der gezeigten Ausführungsform eine Kurbel. Zudem ist das Verbindungselement 113 drehbar mit der unteren Begrenzungsplatte 112 verbunden. In der gezeigten Ausführungsform ist hierzu an der unteren Begrenzungsplatte 112 ein Verbindungssteg 114 vorgesehen. In dem Verbindungssteg 114 ist eine Durchlassöffnung vorgesehen, in der vorzugsweise ein Innengewinde vorgesehen ist. Durch Drehen des Einstellelementes 13 wird das Verbindungselement 113 in den Verbindungssteg 114 hineingedreht oder aus diesem herausgedreht. Dadurch wird die obere Begrenzungsplatte 111 auf die untere Begrenzungsplatte 112 hinbewegt oder von dieser wegbewegt und somit der Abstand zwischen den Begrenzungsplatten 111, 112 eingestellt.

In den Figuren 4 und 4a sind schematische Schnittansichten von Ausführungsformen der Presseinheit mit unterschiedlichen Presselementen 110 gezeigt. In der Figur 4 weist das Presselement 110 die Form eines Kreisrings auf. In der Figur 4a entspricht die Form des Presselementes 110 der inneren Kontur des Reifens 2.

In der in Figuren 5 bis 7 gezeigten Ausführungsform ist zudem der Fluidführungskanal 120, der in der Fluidzuleitung 12 gebildet ist, zweiteilig. Insbesondere besteht der Fluidführungskanal 120 aus zwei Kanalteilen. Insbesondere ist ein unterer Zuleitungskanal 122 und ein oberer Zuleitungskanal 121 vorgesehen. Die Zuleitungskanäle 121, 122 weisen jeweils eine Rohrform auf und sind zueinander in axialer Richtung verschiebbar. Somit ist der Fluidführungskanal 120 teleskopierbar. In der gezeigten Ausführungsform ist der Außendurchmesser des oberen Zuleitungskanals 121 geringer als der Innendurchmesser des unteren Zuführungskanals 122. Der obere Zuleitungskanal 121 ist an der Unterseite der oberen Begrenzungsplatte 111 befestigt. Der untere Zuleitungskanal 122 ist an der Unterseite der unteren Begrenzungsplatte 112 befestigt. In dem oberen Zuleitungskanal 121 sind in der gezeigten Ausführungsform in der Mantelfläche zwei Fluidauslassöffnungen 123 vorgesehen. Die Fluidauslassöffnungen 123 erstrecken sich in axialer Richtung und sind diametral zueinander vorgesehen. Die Fluidauslassöffnungen 123 können auch als Schlitz der Spalt bezeichnet werden. Die Fluidauslassöffnungen 123 können sich über die gesamte Länge des oberen Zuleitungskanals 121 erstrecken oder zu zumindest dem oberen Ende des Zuleitungskanals 121 beabstandet enden.

In der unteren Begrenzungsplatte 112 ist in der in den Figuren 5 bis 8 gezeigten Ausführungsform eine Durchlassöffnung vorgesehen, durch die der obere Zuleitungskanal 121 in den unteren Zuleitungskanal 122 durchgreifen kann. Über diese Durchlassöffnung erstreckt sich der Verbindungssteg 114 diametral. Die Breite des Verbindungsstegs 114 entspricht der Breite der Fluidauslassöffnung 123.

Am unteren Ende des unteren Zuleitungskanals 122 ist ein Leitungsanschluss 124 vorgesehen. Über diesen Leitungsanschluss 124 kann ein Fluid von einer Fluidquelle (nicht gezeigt) in den Fluidführungskanal 120 und insbesondere in den unteren Zuleitungskanal 122 eingebracht werden. Wie sich aus den Figuren 5 und 6 ergibt, strömt das Fluid über den unteren Zuleitungskanal 122 zu dem oberen Zuleitungskanal 121 und verlässt diesen über die Fluidauslassöffnungen 123. Von der Fluidauslassöffnung 123 strömt das Fluid in das Innere des Presselementes 110. Der Abstand zwischen der ersten und zweite Begrenzungsplatte 111, 112 am Rand bildet dabei die Zuführöffnung zu dem Presselement 110.

Unter Bezugnahme auf Figur 1 wird im Folgenden das Durchführen einer Ausführungsform des Verfahrens zum Anpressen eines Schaumstoffstreifens 22 in einem Reifen 2 beschrieben.

In Figur 1 ist eine Ausführungsform der Anpressvorrichtung 1 gezeigt. Das Basisteil 10 weist eine Oberfläche auf, auf die der Reifen 2 aufgelegt werden kann. Das Basisteil 10 stellt in der gezeigten Ausführungsform einen Tisch dar. In der Oberfläche des Basisteils 10 sind Zentrierelemente 100 gelagert. Diese können insbesondere Rollen, Kugeln oder Kugelrollen darstellen. Zudem umfasst die Anpressvorrichtung 1 eine Presseinheit 11, von der in Figur 1 nur die Begrenzungsplatten 111, 112, das Einstellelement 13 für die obere Begrenzungsplatte 111 und ein Teil der Fluidzuleitung 12 sowie ein Einstellelement 14 für die untere Begrenzungsplatte 112 sichtbar sind. Das Presselement ist in der Figur 1 nicht gezeigt. Über das Einstellelement 14 kann die relative Position der unteren Begrenzungsplatte 112 zu der Oberfläche des Basisteils 10 auf die der Reifen aufgelegt wird, eingestellt werden. Weiterhin ist in der Figur 1 eine Linearführung 15 gezeigt, die bei der Höheneinstellung der unteren Begrenzungsplatte 112 dient. In der gezeigten Ausführungsform ist zudem eine Einstellhilfe 16 vorgesehen, die einen ausklappbaren Arm umfasst, durch das Erreichen einer Höhe der oberen Begrenzungsplatte 111 über dem Basisteil 10 erfasst oder die Höhe der oberen Begrenzungsplatte 111 begrenzt werden kann.

Die Anpressvorrichtung 1 weist in der gezeigten Ausführungsform weiterhin eine Bedieneinheit 17 auf, über die insbesondere die Fluidzufuhr zu dem Presselement 110 eingestellt werden kann.

Obwohl für die Einstellung der Höhen der oberen und unteren Begrenzungsplatte 111, 112 gemäß der Figur 1 mechanische Elemente verwendet werden, liegt es auch im Rahmen der Erfindung, dass die Begrenzungsplatten 111, 112 über elektrische oder hydraulische Mittel bewegt werden und deren Position beispielsweise über Sensoren erfasst werden.

Zum Applizieren eines Schaumstoffstreifens 22 auf der inneren Lauffläche 21 eines Reifens 2 wird zunächst Klebstoff auf die innere Lauffläche 21 des Reifens 2, die dem Profil 20 des Reifens 2 gegenüberliegt, aufgebracht. Der Klebstoff wird insbesondere in Form von Raupen aufgebracht. In einem weiteren Schritt wird der Schaumstoffstreifen 22 in den Reifen 2 eingebracht und an der inneren Lauffläche 21 fixiert. Dies kann beispielsweise durch eine Andrückrolle einer Streifenkassette erfolgen. Alternativ kann der Klebstoff an dem Schaumstoffstreifen 22 vorgesehen werden, bevor der Schaumstoffstreifen 22 in den Reifen 2 eingebracht wird. Die Schritte des Aufbringens von Klebstoff und Schaumstoffstreifen 22 können auf dem Basisteil 10 der Anpressvorrichtung 1 durchgeführt werden. Es liegt aber auch im Rahmen der Erfindung, dass diese Schritte auf einer separaten Vorrichtung vorgenommen werden und der Reifen 2, der mit Klebstoff und dem Schaumstoffstreifen 22 bestückt ist, anschließend auf das Basisteil 10 der Anpressvorrichtung 1 aufgelegt wird.

Der Reifen 2 wird so auf dem Basisteil 10 positioniert, dass die Begrenzungsplatten 111, 112 mit den Felgenöffnungen des Reifens 2 ausgerichtet sind. Insbesondere liegen die Begrenzungsplatten 111, 112 in Draufsicht auf die Felgenöffnung innerhalb der Felgenöffnung.

In einem weiteren Schritt werden die Höhe der unteren Begrenzungsplatte 112 und die relative Position der oberen Begrenzungsplatte 111 zu der unteren Begrenzungsplatte 112 eingestellt. Hierzu kann beispielsweise zunächst über das Einstellelement 14 die Höhe der unteren Begrenzungsplatte zu der Oberfläche des Basisteils 10 eingestellt werden, bis diese Höhe größer ist als der Abstand der unteren Felgenöffnung des Reifens 2 zu der Oberfläche des Basisteils 10. Dadurch liegt die untere Begrenzungsplatte 111 im Inneren des Reifens 2. Anschließend kann der relative Abstand zwischen der unteren und oberen Begrenzungsplatte 112, 111 eingestellt werden. Hierbei wird dieser Abstand so eingestellt, dass auch die obere Begrenzungsplatte 111 im Inneren des Reifens 2 liegt.

Alternativ kann zunächst der relative Abstand zwischen der oberen und unteren Begrenzungsplatte 111, 112 eingestellt werden und anschließend die Höhe der unteren Begrenzungsplatte zu dem Basisteil eingestellt werden.

Der Abstand zwischen den Felgenöffnungen in axialer Richtung ist für den jeweiligen Reifen 2 bekannt, so dass der relative Abstand zwischen den Begrenzungsplatten 111, 112 entsprechend vorbestimmt werden kann. Ist dieser vorbestimmte Abstand bekannt, kann die nachträgliche Einstellung der Höhe der unteren Begrenzungsplatte 112 durch eine Einstellhilfe 16, wie dem in Figur 1 gezeigten ausklappbaren Arm überwacht werden.

Nachdem die Begrenzungsplatten 111, 112 in dem Reifen 2 positioniert sind, wird das Presselement 110 durch Fluid gefüllt. Durch das Expandieren des Presselementes 110 insbesondere in radialer Richtung gelangt die radiale Außenseite des Presselementes 110 mit der Innenseite des Schaumstoffstreifens 22 in Kontakt. Sofern der Reifen 2 zu Trägervorrichtung, nämlich den Begrenzungsplatten 111, 112 und der damit verbundenen Fluidzuleitung 12 versetzt auf das Basisteil 10 der Anpressvorrichtung 1 aufgelegt worden sein, bewegt sich durch diesen Kontakt der Reifen 2 in eine um die Mittelachse der Presseinheit 10, insbesondere der Begrenzungsplatten 111, 112 zentrierte Position. Diese Bewegung wird durch die Zentrierelemente 100 des Basisteils 10 unterstützt, insbesondere, da dadurch keine Reibkräfte beim Verschieben des Reifens 2 auf dem Basisteil 10 überwunden werden müssen beziehungsweise diese Reibkräfte minimiert werden können.

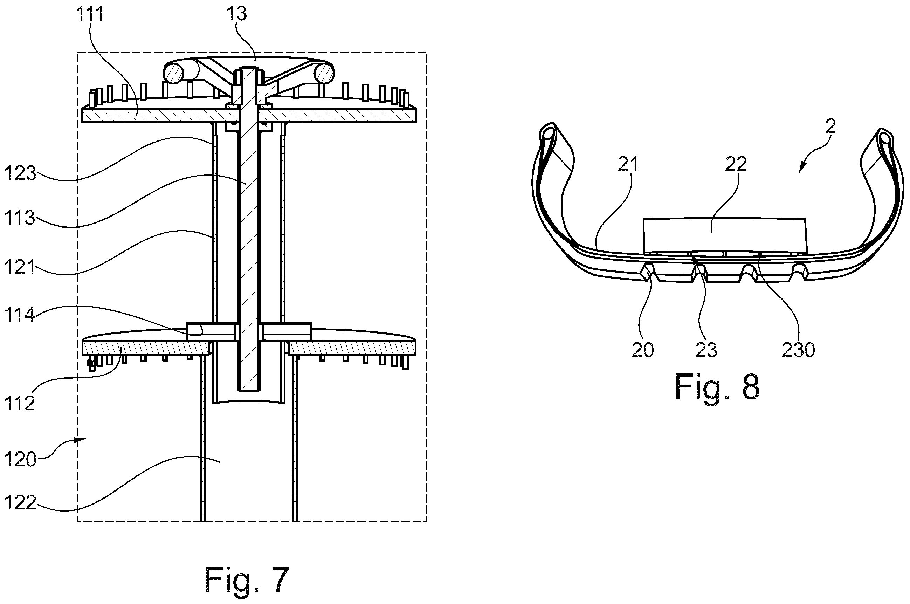

In Figur 8 ist ein Schnittbild eines Reifenteils gezeigt. Der Reifen 2 weist in der gezeigten Ausführungsform einen Schaumstoffstreifen 22 auf, der auf der inneren Lauffläche 21 des Reifens 2 aufgebracht ist. Die inneren Lauffläche 21 liegt der Außenseite des Reifens 2 gegenüber, an der das Profil 20 vorgesehen ist. Diese Außenseite wird auch als Lauffläche des Reifens bezeichnet. Der Schaumstoffstreifen 22 ist über Klebstoff 23 an der inneren Lauffläche 21 gehalten.

Der Zustand, der in Figur 8 gezeigt ist, stellt den Zustand dar, in dem der Schaumstoffstreifen noch nicht durch die Anpressvorrichtung angepresst wurde. In dieser Ansicht lässt sich erkennen, dass die ursprünglich auf die innere Lauffläche 21 des Reifens 2 oder den Schaumstoffstreifen 22 aufgebrachten Kleberaupen Stege 230 bilden. Hintergrund hierfür ist, dass der Schaumstoffstreifen 22 auf die gewölbte innere Lauffläche 21 geklebt wird und schließlich versucht in seine Ausgangslage, das heißt ebene Ausrichtung, zurückzukehren.

Nach einem Anpressen des Schaumstoffstreifens 22 mit der erfindungsgemäßen Anpressvorrichtung 1 werden im Gegensatz zu dem nicht angepressten Zustand nach Figur 8 zwar auch bei einem angepressten Schaumstoffstreifen 22 Eigenspannungen, das heißt das Bestreben zum Zurückkehren zu dem Ausgangszustand auftreten, allerdings wird durch das Anpressen die Klebefläche, das heißt der Kontakt zwischen Klebstoff 23 und inneren Lauffläche 21 des Reifens 2 einerseits und Klebstoff 23 und Schaumstoffstreifen 22 andererseits vergrößert.

Mit zunehmender Haltezeit, das heißt die Zeit, über die die Kraft durch das Presselement 110 auf den Schaumstoffstreifen aufgebracht wird, wird die Haftung des Schaumstoffstreifens 22 an der inneren Lauffläche 21 weiter verbessert.

Die vorliegende Erfindung ist nicht auf die dargestellte Ausführungsformen beschränkt. Beispielsweise kann die Form des Presselementes und / oder die Ausgestaltung der Fluidzuführung von den gezeigten Ausführungsform abweichen.

Gemäß einer Ausführungsform ist die Anpressvorrichtung so aufgebaut, dass viele Reifendimensionen aufgenommen werden können. Je nach Reifentyp kann die Anpressvorrichtung, die auch als Schaumpressstation bezeichnet werden kann, über zwei Handkurbeln eingestellt werden. Die Reifentypen können unterschiedliche Größen aufweisen. Die zu berücksichtigenden Parameter sind dabei unter anderem Innen- und Außendurchmesser sowie die Seitenwandhöhe und Reifenbreite.

Das Hauptelement der Presseinheit besteht aus einer unteren und einer oberen Begrenzungsplatte, die jeweils in der Höhe eingestellt werden können. Um die richtige Einstellung und somit auch eine Wiederholgenauigkeit sicherzustellen, verwendet die Höheneinstellung eine Skala.

Damit das Verfahren beginnen kann, wird zwischen den beiden Begrenzungsplatten ein Presselement, beispielsweise ein aufblasbarer Ring aus Kunststofffolie eingesetzt, der schließlich die Funktion vom Andrücken des Schaumstoffstreifens an den Reifen übernimmt. In der Grundstellung ist dieser Ring in sich zusammengefaltet, da die komplette Luft zuvor abgesaugt worden ist. Hiermit wird der Durchmesser verkleinert um die Möglichkeit zu schaffen den Reifen leichter auf dem Tisch abzulegen. Dabei ist es nicht wichtig, ob der Reifen zentriert abgelegt wird. Sobald der Ring mit Luft befüllt wird, kann sich der Reifen über vorzugsweise im Tisch integrierten Kugelrollen selbst zentrieren.

Der Ring kann mit einem Druck befüllt werden, der das Aufblasen des Rings und die Kraftausübung auf den Schaumstoffstreifen erlaubt. Es kann ein bestimmter Maximaldruck vorgegeben sein, der nicht überschritten werden darf, um ein Platzen des Rings zu verhindern. Eine Sicherheitssensorik kann vorgesehen sein, die im laufenden Prozess überwacht, dass dieser Druck nicht überschritten wird.

Nachdem der Ring aufgeblasen wurde und somit seine Arbeitsstellung erreicht hat, drückt er mit einer bestimmten Kraft den vorher applizierten Schaumstreifen gegen die innere Lauffläche des Reifens. Nach einer bestimmten Haltezeit, wird die Luftkammer möglichst vollständig evakuiert und der Reifen kann der Schaumpressstation entnommen werden.

Hintergrund dieses Haltens der Presskraft für eine bestimmte Zeit ist es, dass sich bessere Eigenschaften bezüglich der Haftung zwischen dem Schaumstoffstreifen und der inneren Lauffläche des Reifens gezeigt haben.

### Bezugszeichen

- 1: Anpressvorrichtung
- 10: Basisteil
- 100: Zentrierelement
- 11: Presseinheit
- 110: Presselement
- 111: obere Begrenzungsplatte
- 112: untere Begrenzungsplatte
- 113: Verbindungselement
- 114: Verbindungssteg
- 12: Fluidzuleitung
- 120: Fluidführungskanal
- 121: erster Zuleitungskanal
- 122: zweiter Zuleitungskanal
- 123: Fluidauslassöffnung
- 124: Leitungsanschluss
- 13: Einstellelement obere Platte
- 14: Einstellelement untere Platte
- 15: Linearführung
- 16: Einstellhilfe
- 17: Bedieneinheit

- 2: Reifen
- 20: Profil
- 21: innere Lauffläche
- 22: Schaumstoffstreifen
- 23: Klebstoff
- 230: Steg

- S: Fluidstrom

## Patentansprüche

1. Vorrichtung zum Anpressen eines Schaumstoffstreifens (22) an der inneren Lauffläche (21) eines Reifens (2), **dadurch gekennzeichnet, dass** die Vorrichtung eine Presseinheit (11) umfasst, die eine Trägervorrichtung und ein Presselement (110) umfasst, wobei die Trägervorrichtung eine Trägervorrichtung für das Presselement (110) ist und wobei das Presselement (110) ein aufblasbares Element darstellt, das sich über zumindest einen Teil des äu-ßeren Umfangs der Trägervorrichtung erstreckt und zumindest in radialer Richtung expandierbar ist.

2. Vorrichtung nach Anspruch 1, wobei das Presselement (110) sich über den gesamten äu-ßeren Umfang der Trägervorrichtung erstreckt.

3. Vorrichtung nach einem der Ansprüche 1 oder 2, wobei das Presselement (110) im aufgeblasenen Zustand einen Ring mit Kreisringform darstellt.

4. Vorrichtung nach einem der Ansprüche 1 bis 3, wobei das Presselement (110) in der radial nach innen weisenden Innenseite zumindest eine Zuführöffnung für Aufblasfluid aufweist.

5. Vorrichtung nach Anspruch 4, wobei die Zuführöffnung sich über den gesamten Umfang der Innenseite des Presselementes (110) erstreckt.

6. Vorrichtung nach Anspruch 1 bis 5, wobei die Trägervorrichtung eine erste Begrenzungsplatte (111) und eine zweite Begrenzungsplatte (112) umfasst.

7. Vorrichtung nach Anspruch 6, wobei die erste und zweite Begrenzungsplatte (111, 112) beweglich über ein Verbindungselement (113) miteinander verbunden sind, durch das der Abstand zwischen den Begrenzungsplatten (111, 112) verändert werden kann.

8. Vorrichtung nach einem der Ansprüche 6 oder 7, wobei das Presselement (110) am Umfang der ersten und zweiten Begrenzungsplatte (111, 112) befestigt ist.

9. Vorrichtung nach einem der Ansprüche 1 bis 8, wobei die Presseinheit eine Fluidzuleitung (12) zum Zuführen des Aufblasfluids in das Innere des Presselementes (110) umfasst.

10. Vorrichtung nach Anspruch 9, wobei die Fluidzuleitung (12) einen ersten Zuleitungskanal (121) und einen zweiten Zuleitungskanal (122) umfasst, die gegeneinander verschiebbar sind, und in den ersten Zuleitungskanal (121) zumindest eine Fluidauslassöffnung (123) eingebracht ist.

11. Vorrichtung nach einem der Ansprüche 1 bis 10, wobei die Vorrichtung ein Basisteil (10) zum Auflegen des Reifens (2) aufweist und an dem Basisteil (10) die Presseinheit (11) vorgesehen ist.

12. Verfahren zum Anpressen eines Schaumstoffstreifens an der inneren Lauffläche (21) eines Reifens (2), **dadurch gekennzeichnet, dass** das Verfahren mit einer Vorrichtung nach einem der Ansprüche 1 bis 11 durchgeführt wird.

13. Verfahren nach Anspruch 12, wobei das Verfahren den Schritt des Aufblasens des Presselementes (110) nach dem Einbringen in das Innere des Reifens (2) umfasst.

14. Verfahren nach einem der Ansprüche 12 oder 13, wobei die Vorrichtung eine erste Begrenzungsplatte (111) und eine zweite Begrenzungsplatte (112) aufweist und das Verfahren den Schritt des Einstellens des Abstandes zwischen der ersten und zweiten Begrenzungsplatte (111, 112) umfasst.
